# EUROPÄISCHE PATENTSCHRIFT

(11) **EP 0 899 859 B1**
(45) Veröffentlichungstag und Bekanntmachung des Hinweises auf die Patenterteilung: **19.01.2005**
(21) Anmeldenummer: 98810725.6
(22) Anmeldetag: 28.07.1998
(51) Int. Cl.: H02M 1/12, H02M 7/48

(54) **U-Umrichter**
Intermediate voltage link inverter
Onduleur avec circuit intermédiaire de tension

(30) Priorität: 23.08.1997 DE 19736786
(43) Veröffentlichungstag der Anmeldung: 03.03.1999
(73) Patentinhaber: ABB Schweiz AG, 5400 Baden (CH)
(72) Erfinder: Steinke, Jürgen, Dr., 79774 Albbruck (DE); Stulz, Christian, Dr., 8008 Zürich (CH)
(74) Vertreter: ABB Patent Attorneys

(56) Entgegenhaltungen:
- EP-A- 0 473 192
- EP-A- 0 682 395
- WO-A-94/28615
- US-A- 4 976 334
- US-A- 5 526 252

## Beschreibung

### TECHNISCHES GEBIET

Die vorliegende Erfindung bezieht sich auf das Gebiet der Leistungselektronik. Sie betrifft einen U-Umrichter mit einem Spannungszwischenkreis und einem auf den Spannungszwischenkreis folgenden Wechselrichter, welcher Wechselrichter an seinen Ausgängen eine 3-phasige Wechselspannung abgibt und über eine Filteranordnung mit den Ausgangsklemmen des U-Umrichters in Verbindung steht, wobei die Filteranordnung jeweils eine zur Ausgangsklemme in Serie liegende Filterdrossel und einen von der Ausgangsklemme zu einem gemeinsamen Kondensatorsternpunkt führenden Filterkondensator umfasst.

Ein solcher U-Umrichter ist z.B. aus der Druckschrift EP-A1-0 682 401 (Fig. 1) bekannt.

### STAND DER TECHNIK

Zur prinzipiell verlustfreien Filterung der Ausgangsspannung eines Umrichters mit Spannungszwischenkreis (U-Umrichter) kommt heutzutage ein Filter bestehend aus Filterdrosseln und Filterkondensatoren (LC-Filter) zum Einsatz. Eine mögliche Ausführungsform ist die mit in Sternschaltung angeordneten Filterkondensatoren, wie sie in der eingangs genannten Druckschrift beschrieben und in Fig. 1 wiedergegeben ist. Der U-Umrichter 39 der Fig. 1 umfasst dabei einen Spannungszwischenkreis 11 mit zwei Klemmen 12 und 13, zwischen denen Zwischenkreiskondensatoren 14, 16 angeordnet sind, die einen Mittelabgriff 15 haben oder auch als ein Kondensator ausgeführt sein können. Auf den Spannungszwischenkreis 11 folgt ein (mit Leistungshalbleitern bestückter) Wechselrichter 10, der die erzeugte mehrphasige Wechselspannung über ein aus Filterdrosseln 17, 18 und 19 sowie Filterkondensatoren 23, 24 und 25 gebildetes Filter an entsprechenden Ausgangsklemmen 20, 21 und 22 abgibt. Die Filterdrosseln 17-19 liegen jeweils in Serie mit den Ausgangsklemmen 20-22. Die Filterkondensatoren 23-25 führen von den Ausgangsklemmen 20-22 zu einem gemeinsamen Kondensatorsternpunkt 26.

Bei einer anderen bekannten Filterschaltung, die in Fig. 2 wiedergegeben ist, sind die Filterkondensatoren 27, 28, 29 im Dreieck, d.h., jeweils zwischen zwei der Ausgangsklemmen 20-22, geschaltet.

Bei einer weiteren Filterschaltung, die in Fig. 3 dargestellt ist, und die ebenfalls aus der eingangs genannten Druckschrift (Fig. 2 und 3) bekannt ist, sind je drei Filterkondensatoren 30-32 und 33-35 von den Ausgangsklemmen 20-22 gemeinsam zu den Klemmen 12 und 13 des Spannungszwischenkreises 11 zurückgeführt.

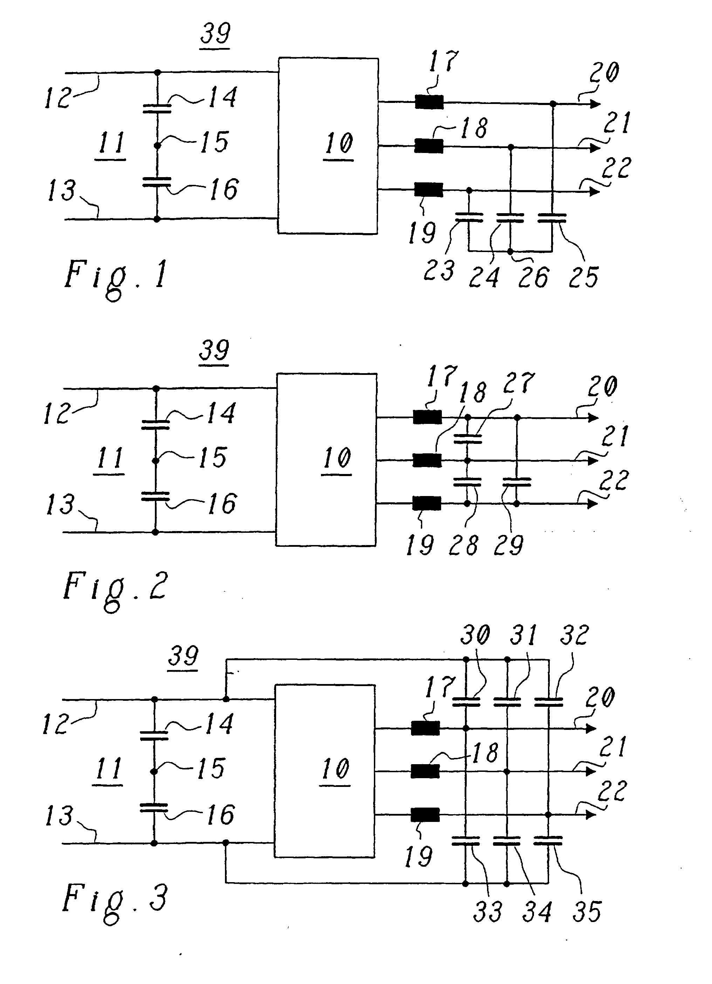

Die Schaltungen aus Fig. 1 und 2 filtern nur die reinen Drehspannungssysteme. Das Gleichsystem hingegen wird nicht gefiltert. Die Spannungssprünge im Gleichsystem gehen ungehindert an die Anschlussklemmen 20-22 der Last weiter, falls nicht der Sternpunkt der Last oder in Fig. 1 der Kondensatorsternpunkt 26 geerdet ist. Beide Massnahmen sind jedoch nicht generell einsetzbar.

Die Schaltung gemäss Fig. 3 hat diese Nachteile nicht. Ihr Nachteil ist system-technischer Natur und kommt zum Tragen, wenn die Einsatzbedingungen für das Filter derart sind, dass es ohne Zusatzmassnahmen ständig zu Eigenschwingungen angeregt wird. Diese Eigenschwingungen sind verlustfrei nur durch eine Regelung bedämpfbar, die in die Schaltfolge des Wechselrichters 10 eingreift. Die Schaltfolge des Wechselrichters 10 wird heutzutage üblicherweise von einem Regelrechner bestimmt, der aufgrund der Lastbedingungen die Schaltbefehle für die Leistungsschalter im Wechselrichter ermittelt. Der Regelrechner arbeitet üblicherweise wegen der Symmetrie des Ausgangs in nur 2 Koordinaten. Daraus können die Schaltzustände der 3 Phasen bestimmt werden. In der Schaltung nach Fig. 3 sind aus Sicht des Filters die 3 Phasen entkoppelt. Eine Resonanzregelung muss also mit 3 unabhängig wirkenden Regelkreisen ausgeführt werden. Damit ist die Resonanzausregelung nicht mehr einfach in die Lastregelung integrierbar. Da beide Teile der Regelung auf die gleiche Stellgrösse zugreifen, dürfen sie jedoch nicht entkoppelt arbeiten. Eine Lösung dieses Konfliktes erfordert in jedem Fall einen erheblichen Zusatzaufwand. Ein weiterer Nachteil der Schaltung nach Fig. 3 ist die hohe zusätzliche Strombelastung der Zwischenkreiskondensatoren und des Wechselrichters, die sich insbesondere bei niedrigen Schaltfrequenzen der Wechselrichter-Halbleiterschalter aus der Umladung der Filterkondensatoren durch das Spannungs-Gleichsystem ergeben. Die gleichen Nachteile ergeben sich auch, wenn man in der Schaltung aus Fig. 1 den Kondensatorsternpunkt 26 direkt mit einer der Klemmen 12, 13 oder dem Mittelabgriff 15 verbindet.

### DARSTELLUNG DER ERFINDUNG

Es ist Aufgabe daher der Erfindung, einen U-Umrichter der eingangs genannten Art so zu verändern, dass ohne grossen Zusatzaufwand eine wirksame Filterung auch des Gleichsystems realisiert wird.

Die Aufgabe wird bei einem U-Umrichter der eingangs genannten Art dadurch gelöst, dass der Kondensatorsternpunkt über ein RC-Glied, gebildet durch einen Widerstand in Serie geschaltet zu einem Kondensator, an den Spannungszwischenkreis angeschlossen ist. Der Kondensator des RC-Gliedes eliminiert stationäre Ströme durch den Widerstand des RC-Gliedes. Der Widerstand des RC-Gliedes dient als Dämpfungswiderstand und dämpft die Schwingungen.

Eine bevorzugte Ausführungsform der erfindungsgemässen Schaltung ist dadurch gekennzeichnet, dass die Kapazität des Kondensators sehr viel kleiner ist als die Kapazität der Filterkondensatoren. Hierdurch wird die Resonanzregelung für das Hauptfilter mit den Filterdrosseln und Filterkondensatoren nicht beeinflusst. Die Steilheit der Spannungssprünge im Gleichsystem wird jedoch wirksam begrenzt. Durch eine geeignete Auslegung wird gleichzeitig die hochfrequente Resonanz wirksam bedämpft, ohne unakzeptabel hohe Verluste zu verursachen.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1-3: verschiedene Filterschaltungen für U-Umrichter nach dem Stand der Technik; und
- Fig. 3-6: verschiedene Ausführungsbeispiele für eine Filterschaltung nach der Erfindung, wobei der Sternpunkt über das RC-Glied an unterschiedlichen Stellen an den Spannungszwischenkreis angeschlossen ist.

### WEGE ZUR AUSFÜHRUNG DER ERFINDUNG

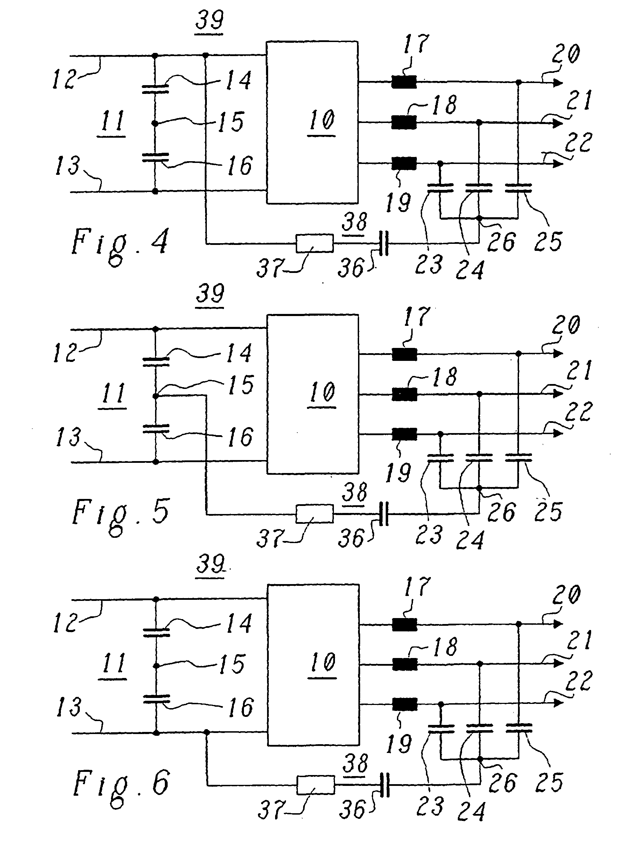

Ausgehend von einer Schaltung, wie sie in Fig. 1 dargestellt ist und zum Stand der Technik gehört, wird gemäss der Erfindung der Kondensatorsternpunkt 26 über ein RC-Glied aus einem Kondensator und einem Widerstand an den Spannungszwischenkreis 11 angeschlossen (zurückgekoppelt). Hierdurch werden die Sprünge im Gleichanteil zwar nicht vollständig eliminiert, aber auf ein folerierbares Mass (z.B. 500 V/µs) begrenzt. Der Anschluss kann dabei gemäss den Ausführungsbeispielen aus Fig. 4 bis 6 an verschiedenen Stellen erfolgen. Gemäss Fig. 4 wird der Kondensatorsternpunkt 26 über das aus Kondensator 36 und Widerstand 37 bestehende RC-Glied 38 auf die Klemme 12 (positive Klemme) des Spannungszwischenkreises 11 zurückgekoppelt. Gemäss Fig. 6 wird der Kondensatorsternpunkt 26 über das aus Kondensator 36 und Widerstand 37 bestehende RC-Glied 38 auf die Klemme 13 (negative Klemme) des Spannungszwischenkreises 11 zurückgekoppelt. Gemäss Fig. 5 wird - wenn vorhanden - der Mittelabgriff 15 der Zwischenkreiskondensatoren 14, 16 als Anschlusspunkt für das RC-Glied 38 verwendet.

Für einen Umrichter von 1MVA/4kV in Dreipunktschaltung mit 500 Hz Schaltfrequenz mit einer Filterschaltung nach der Erfindung wurden verschiedene beispielhafte Simulationen durchgeführt. Bei einer Kapazität des Kondensators 36 von 82,9 nF und einem Widerstand 37 von 603 Ohm ergaben sich dabei Verluste von 341 Watt und Steilheiten du/dt im Gleichsystem von 495 V/µs.

### BEZEICHNUNGSLISTE

- 10: Wechselrichter
- 11: Spannungszwischenkreis
- 12,13: Klemme (Zwischenkreis)
- 14,16: Zwischenkreiskondensator
- 15: Mittelabgriff (Zwischenkreiskondensator)
- 17,18,19: Filterdrossel
- 20,21,22: Ausgangsklemme
- 23,24,25: Filterkondensator
- 26: Kondensatorsternpunkt
- 27,28,29: Filterkondensator
- 30,..,35: Filterkondensator
- 36: Kondensator (RC-Glied)
- 37: Widerstand (RC-Glied)
- 38: RC-Glied
- 39: U-Umrichter

## Patentansprüche

1. U-Umrichter (39) mit einem Spannungszwischenkreis (11) und einem auf den Spannungszwischenkreis (11) folgenden Wechselrichter (10), welcher Wechselrichter (10) an seinen Ausgängen eine 3-phasige Wechselspannung abgibt und über eine Filteranordnung (17,..,19; 23,..,25) mit den Ausgangsklemmen (20,..,22) des U-Umrichters (39) in Verbindung steht, wobei die Filteranordnung jeweils eine zur Ausgangsklemme (20,..,22) in Serie liegende Filterdrossel (17, ..,19) und einen von der Ausgangsklemme (20,..,22) zu einem gemeinsamen Kondensatorsternpunkt (26) führenden Filterkondensator (23,..,25) umfasst, **dadurch gekennzeichnet, dass** der Kondensatorsternpunkt (26) über ein RC-Glied (38), gebildet durch einen Widerstand in Serie geschaltet zu einem Kondensator, an den Spannungszwischenkreis (11) angeschlossen ist.

2. U-Umrichter nach Anspruch 1, **dadurch gekennzeichnet, dass** die Kapazität des Kondensators (36) sehr viel kleiner ist als die Kapazität der Filterkondensatoren (23,..,25).

3. U-Umrichter nach einem der Ansprüche 1 und 2, **dadurch gekennzeichnet, dass** der Kondensatorsternpunkt (26) über das RC-Glied (38) an die positive Klemme (12) des Spannungszwischenkreises (11) angeschlossen ist.

4. U-Umrichter nach einem der Ansprüche 1 und 2, **dadurch gekennzeichnet, dass** der Kondensatorsternpunkt (26) über das RC-Glied (38) an die negative Klemme (13) des Spannungszwischenkreises (11) angeschlossen ist.

5. U-Umrichter nach einem der Ansprüche 1 und 2, **dadurch gekennzeichnet, dass** der Spannungszwischenkreis (11) Zwischenkreiskondensatoren (14, 16) mit einem Mittelabgriff (15) aufweist, und dass der Kondensatorsternpunkt (26) über das RC-Glied (36, 37, 38) an den Mittelabgriff (15) der Zwischenkreiskondensatoren (14, 16) angeschlossen ist.

## Claims

1. Voltage converter (39) having a voltage intermediate circuit (11) and an invertor (10) following on from the voltage intermediate circuit (11), which invertor (10) produces a three-phase AC voltage at its outputs and is connected to the output terminals (20,..,22) of the voltage converter (39) via a filter arrangement (17,..,19; 23,..,25), the filter arrangement having in each case a filter inductor (17,..,19), connected in series with the output terminal (20,..,22), and a filter capacitor (23,..,25) which is connected between the output terminal (20,..,22) and a common capacitor star point (26), **characterized in that** the capacitor star point (26) is connected to the voltage intermediate circuit (11) via an RC element (38), formed by a resistor connected in series with a capacitor.

2. Voltage converter according to Claim 1, **characterized in that** the capacitance of the capacitor (36) is very much lower than the capacitance of the filter capacitors (23,..,25).

3. Voltage converter according to one of Claims 1 and 2, **characterized in that** the capacitor star point (26) is connected to the positive terminal (12) of the voltage intermediate circuit (11) via the RC element (38).

4. Voltage converter according to one of Claims 1 and 2, **characterized in that** the capacitor star point (26) is connected to the negative terminal (13) of the voltage intermediate circuit (11) via the RC element (38).

5. Voltage converter according to one of Claims 1 and 2, **characterized in that** the voltage intermediate circuit (11) has intermediate circuit capacitors (14, 16) with a center tap (15), and **characterized in that** the capacitor star point (26) is connected to the center tap (15) of the intermediate circuit capacitors (14, 16) via the RC element (36, 37, 38).

## Revendications

1. Convertisseur de tension (39) comprenant un circuit intermédiaire de tension (11) et un onduleur (10) branché en aval du circuit intermédiaire de tension (11), lequel onduleur (10) délivre à ses sorties une tension alternative triphasée et est relié aux bornes de sortie (20, ..., 22) du convertisseur de tension (39) par le biais d'un arrangement de filtrage (17, ..., 19 ; 23, ..., 25), l'arrangement de filtrage comprenant à chaque fois une bobine de filtrage (17, ..., 19) branchée en série avec la borne de sortie (20, ..., 22) et un condensateur de filtrage (23, ..., 25) branché entre la borne de sortie (20, ..., 22) et un point commun des condensateurs (26), **caractérisé en ce que** le point neutre des condensateurs (26) est raccordé au circuit intermédiaire de tension (11) par le biais d'un réseau RC (38), constitué d'une résistance branchée en série avec un condensateur.

2. Convertisseur de tension selon la revendication 1, **caractérisé en ce que** la capacité du condensateur (36) est très inférieure à la capacité des condensateurs de filtrage (23, ..., 25).

3. Convertisseur de tension selon l'une des revendications 1 et 2, **caractérisé en ce que** le point neutre des condensateurs (26) est raccordé à la borne positive (12) du circuit intermédiaire de tension (11) par le biais du réseau RC (38).

4. Convertisseur de tension selon l'une des revendications 1 et 2, **caractérisé en ce que** le point neutre des condensateurs (26) est raccordé à la borne négative (13) du circuit intermédiaire de tension (11) par le biais du réseau RC (38).

5. Convertisseur de tension selon l'une des revendications 1 et 2, **caractérisé en ce que** le circuit intermédiaire de tension (11) présente des condensateurs de circuit intermédiaire (14, 16) munis d'une prise centrale (15) et que le point neutre des condensateurs (26) est raccordé à la prise centrale (15) des condensateurs de circuit intermédiaire (14, 16) par le biais du réseau RC (36, 37, 38).
